# EUROPEAN PATENT APPLICATION

(11) **EP 4 113 792 A1**
(43) Date of publication of application: **04.01.2023**
(21) Application number: 20920900.6
(22) Date of filing: 26.02.2020
(51) Int. Cl.: H02K 1/18, H02K 15/02

(54) **STATOR, ELECTRIC MOTOR, BLOWER, AIR CONDITIONER, AND STATOR MANUFACTURING METHOD**

(71) Applicant: MITSUBISHI ELECTRIC CORPORATION, Chiyoda-ku Tokyo 100-8310 (JP)
(72) Inventor: TAKAHASHI, Ryogo, Tokyo 100-8310 (JP); ASO, Hiroki, Tokyo 100-8310 (JP); SHIMOKAWA, Takaya, Tokyo 100-8310 (JP); WATANABE, Takanori, Tokyo 100-8310 (JP); TSUCHIDA, Kazuchika, Tokyo 100-8310 (JP)
(74) Representative: Pfenning, Meinig & Partner mbB
(86) International application number: PCT/JP2020/007826
(87) International publication number: WO 2021/171435

(57) **Abstract**

A stator includes a stator core having a core back in an annular shape about an axis, and a nonmagnetic mold resin part surrounding the stator core from outside in a radial direction about the axis. The stator core has a core-back gap passing in the radial direction through at least a part of the core back in a circumferential direction about the axis. The mold resin part reaches an inner side of the core back in the radial direction from an outer side of the core back in the radial direction through the core-back gap.

## Description

### TECHNICAL FIELD

The present disclosure relates to a stator, a motor, a fan, an air conditioner, and a manufacturing method of the stator.

### BACKGROUND ART

A stator of a motor includes a stator core which has an annular core back and a plurality of teeth protruding inward in the radial direction from the core back. The stator core is covered with a mold resin part from outside. Recently, there is a proposed stator including a stator having a core back divided in the circumferential direction (see, for example, Patent Reference 1).

### PRIOR ART REFERENCE

### PATENT REFERENCE

Patent Reference 1: Japanese Patent Application Publication No. 2007-325354 (see Abstract)

### SUMMARY OF THE INVENTION

### PROBLEM TO BE SOLVED BY THE INVENTION

However, in a case where the core back is divided in the, circumferential direction, there tends to be variation in the positions of the tip ends of the teeth. Consequently, an air gap between the stator and the rotor tends to be non-uniform in the circumferential direction, and vibration and noise are likely to occur.

The present disclosure is intended to solve the above-described problem, and an object of the present disclosure is to reduce vibration and noise.

### MEANS OF SOLVING THE PROBLEM

A stator according to the present disclosure includes a stator core having a core back in an annular shape about an axis, and a mold resin part surrounding the stator core from outside in a radial direction about the axis. The mold resin part is nonmagnetic. The stator core has a core-back gap passing in the radial direction through at least a part of the core back in a circumferential direction about the axis. The mold resin part reaches an inner side of the core back in the radial direction from an outer side of the core back in the radial direction through the core-back gap.

### EFFECTS OF THE INVENTION

According to the present disclosure, the core-back gap is provided to pass through the core back in the radial direction, and thus molding can be performed in a state where tip ends of teeth on the inner side in the radial direction are pressed against a positioning surface of a mold. Thus, the misalignment of the teeth in the radial direction is suppressed. In addition, the mold resin part holds the core back from both the outer side and the inner side in the radial direction, and thus it is possible to suppress a reduction in the rigidity of the stator core. As a result, vibration and noise can be reduced.

### BRIEF DESCRIPTION OF THE DRAWINGS

FIG. 1 is a partial sectional view illustrating a motor of a first embodiment.
FIG. 2 is a sectional view illustrating a rotor of the first embodiment.
FIG. 3 is a plan view illustrating a stator core of the first embodiment.
FIG. 4 is a plan view illustrating a stator of the first embodiment.
FIG. 5 (A) is a plan view illustrating a split core of the first embodiment, and FIG. 5 (B) is a plan view illustrating a split core unit of the first embodiment.
FIG. 6 is a schematic diagram illustrating the split core unit and a mold resin part of the first embodiment.
FIG. 7 is a diagram illustrating a mold stator of the first embodiment as viewed from an opening side.
FIG. 8(A) is a perspective view illustrating the split core of the first embodiment, and FIG. 8 (B) is an enlarged diagram illustrating a part of an insulator attached to the split core of the first embodiment.
FIG. 9 is a schematic diagram illustrating tapered portions of outer wall portions of the insulator of the first embodiment.
FIG. 10 is a flowchart illustrating a manufacturing process of the motor in the first embodiment.
FIG. 11 is a sectional view illustrating a mold in a molding step of the stator in the first embodiment.
FIG. 12 is an enlarged schematic diagram illustrating a part enclosed by a circle 12 in FIG. 11.
FIG. 13(A) is a sectional view illustrating the split core unit and a center shaft of the mold of the first embodiment, and FIG. 13(B) is an enlarged diagram illustrating a portion enclosed by a circle 13B in FIG. 13(A).
FIG. 14 is a sectional view illustrating the mold in the molding step of the stator in the first embodiment.
FIG. 15(A) is a diagram illustrating two split core units of a stator of a second embodiment, and FIG. 15(B) is a diagram illustrating a state where both split core units are connected.
FIG. 16 is a sectional view illustrating a split core unit and a holding ring of a third embodiment, together with the center shaft of the mold.
FIG. 17 is a sectional view illustrating a rotor of a motor of a fourth embodiment.
FIG. 18(A) is a diagram illustrating an air conditioner to which the motor of each embodiment is applicable, and FIG. 18(B) is a sectional view illustrating an outdoor unit.

### MODE FOR CARRYING OUT THE INVENTION

Hereinafter, embodiments will be described in detail with reference to the figures. The present disclosure is not limited to these embodiments.

### First Embodiment

### (Configuration of Motor 1)

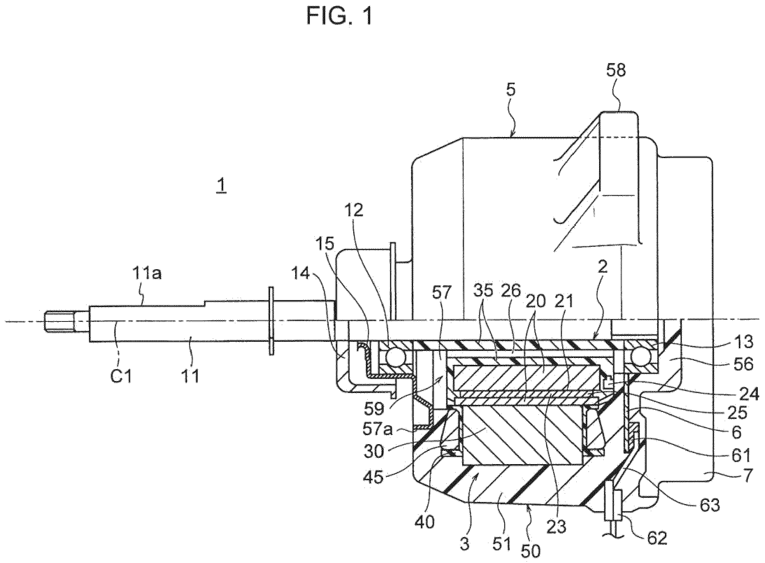

FIG. 1 is a partial sectional view illustrating a motor 1 of a first embodiment. The motor 1 is used, for example, in a fan of an air conditioner.

The motor 1 includes a rotor 2 having a rotation shaft 11 and a mold stator 5. The rotation shaft 11 is a rotation shaft of the rotor 2. The mold stator 5 has a stator 3 having an annular shape and surrounding the rotor 2, a circuit board 6, and a mold resin part 50 serving as a resin part covering these components.

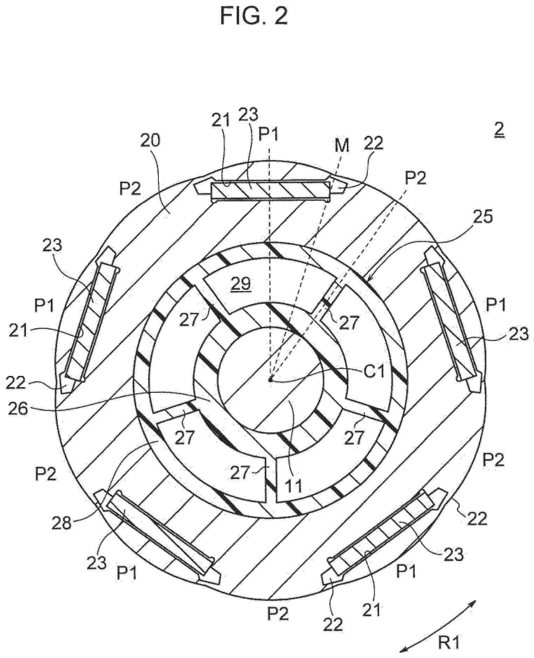

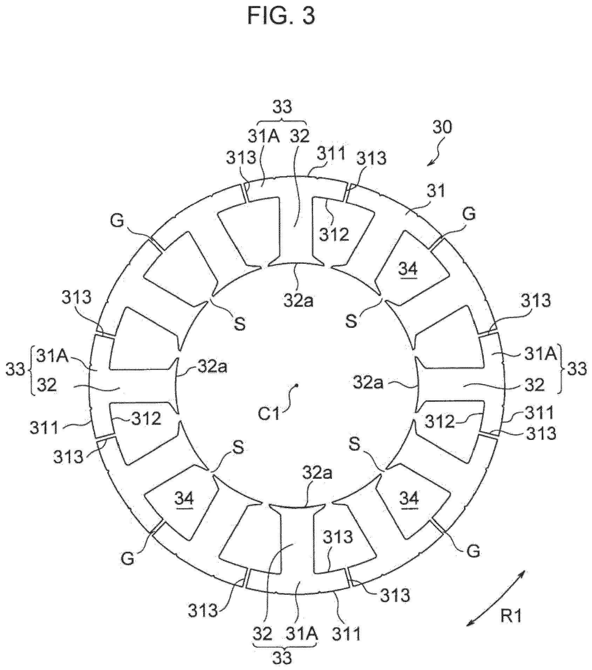

In the description below, the direction of an axis C1, which is a center axis of the rotation shaft 11, is referred to as an "axial direction". The circumferential direction (indicated by an arrow R1 in FIGS. 2, 3 and other figures) about the axis C1 of the rotation shaft 11 is referred to as a "circumferential direction". The radial direction about the axis C1 of the rotation shaft 11 is referred to as a "radial direction".

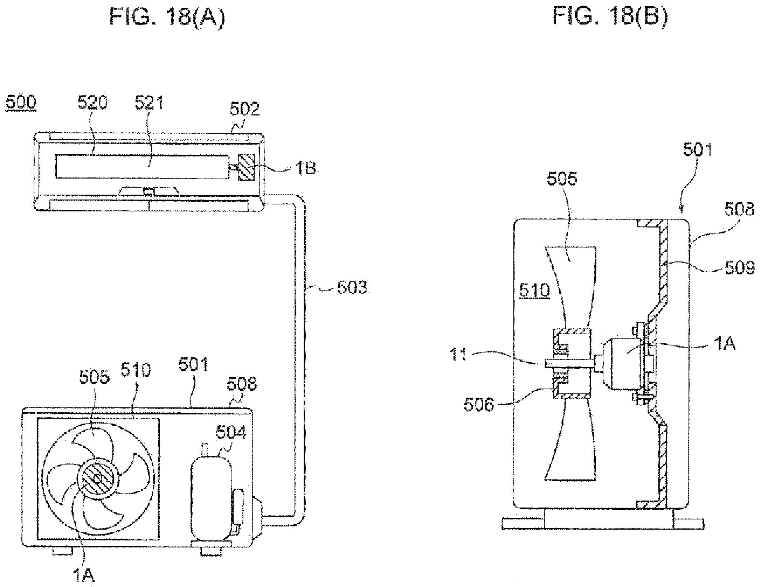

The rotation shaft 11 protrudes from the mold stator 5 to the left side in FIG. 1. An impeller 505 (FIG. 18 (A)) of a fan, for example, is attached to an attachment portion 11a formed at a protruding portion of the shaft. Thus, the protruding side (the left side in FIG. 1) of the rotation shaft 11 is referred to as a "load side", while the opposite side (the right side in FIG. 1) thereof is referred to as a "counter-load side".

### (Configuration of Rotor 2)

FIG. 2 is a sectional view illustrating the rotor 2. As illustrated in FIG. 2, the rotor 2 has the rotation shaft 11, a rotor core 20 fixed to the rotation shaft 11, a plurality of magnets 23 embedded in the rotor core 20, and a resin part 25 provided between the rotation shaft 11 and the rotor core 20.

The rotor core 20 is a member having an annular shape about the axis C1 and is provided on an outer side of the rotation shaft 11 in the radial direction. The rotor core 20 is composed of a plurality of electromagnetic steel sheets which are stacked in the axial direction and fastened to each other in the axial direction by crimping or the like. The sheet thickness of each electromagnetic steel sheet is, for example, 0.1 mm to 0.7 mm.

The rotor core 20 has a plurality of magnet insertion holes 21. The magnet insertion holes 21 are arranged at equal intervals in the circumferential direction and also at equal distances from the axis C1. The number of magnet insertion holes 21 is five in this example.

The magnet insertion hole 21 extends linearly in a direction orthogonal to a straight line in the radial direction passing through a center of the magnet insertion hole 21 in the circumferential direction. In this regard, the magnet insertion hole 21 may also have a V shape such that its center in the circumferential direction protrudes toward the axis C1.

A flux barrier 22, which is a cavity, is formed at each side of the magnet insertion hole 21 in the circumferential direction. A thin-wall portion is formed between the flux barrier 22 and an outer circumference of the rotor core 20. In order to suppress the leakage flux between adjacent magnetic poles, the thickness of the thin-wall portion is set equal to the thickness of each electromagnetic steel sheet, for example.

The magnet 23 is inserted in each magnet insertion hole 21. The magnet 23 is composed of, for example, a rare earth magnet that contains neodymium (Nd), iron (Fe) and boron (B), or a rare earth magnet that contains samarium (Sm), iron and nitrogen (N). The magnet 23 is in the form of a flat plate and has a rectangular cross sectional shape in a plane orthogonal to the axial direction. The magnet 23 is also referred to as a main magnet.

Five magnets 23 have the same magnetic poles on their outer side in the radial direction. In the rotor core 20, magnetic poles opposite to the magnets 23 are formed in regions each between the magnets 23 adjacent in the circumferential direction.

Therefore, in the rotor 2, five first magnetic poles P1 formed by the magnets 23 and five second magnetic poles P2 formed by the rotor core 20 are arranged alternately in the circumferential direction. The first magnetic pole P1 is also referred to as a magnet magnetic pole, while the second magnetic pole P2 is also referred to as a virtual magnetic pole. Such a rotor 2 is referred to as a consequent-pole rotor.

Hereinafter, when the term "magnetic pole" is simply used, it refers to either the first magnetic pole P1 or the second magnetic pole P2. The number of poles of the rotor 2 is ten. The magnetic poles P1 and P2 of the rotor 2 are arranged at equal angular intervals in the circumferential direction. A boundary between the first magnet pole P1 and the second magnetic pole P2 is defined as a pole boundary M.

The outer circumference of the rotor core 20 has a so-called flower circle shape in a plane orthogonal to the axial direction. In other words, the outer circumference of the rotor core 20 has its maximum outer diameter at the pole center of each of the magnetic poles P1 and P2 and minimum outer diameter at each pole boundary M, and extends in an arc shape from the pole center to the pole boundary M. The outer circumference of the rotor core 20 is not limited to the flower circle shape and may have a circular shape.

The number of poles of the rotor 2 is ten in this example, but it is sufficient that the number of poles is an even number of four or more. Moreover, although one magnet 23 is disposed in each magnet insertion hole 21 in this example, two or more magnets 23 may be disposed in each magnet insertion hole 21.

The nonmagnetic resin part 25 is provided between the rotation shaft 11 and the rotor core 20. The resin part 25 holds the rotation shaft 11 and the rotor core 20 in a state where the rotation shaft 11 and the rotor core 20 are separated from each other. The resin part 25 is desirably composed of a thermoplastic resin such as polybutylene terephthalate (PET).

The resin part 25 includes an annular inner cylindrical portion 26 fixed to the rotation shaft 11, an annular outer cylindrical portion 28 fixed to an inner circumference of the rotor core 20, and a plurality of protrusions 27 connecting the inner cylindrical portion 26 and the outer cylindrical portion 28. The protrusions 27 are arranged at equal intervals in the circumferential direction about the axis C1. The number of the protrusions 27 is, for example, half the number of poles, and is five in this example.

The rotation shaft 11 is fixed to the inside of the inner cylindrical portion 26 of the resin part 25. The protrusions 27 are arranged at equal in the circumferential direction and radially extend outward in the radial direction from the inner cylindrical portion 26. Hollow portions 29 are formed each between the protrusions 27 that are adjacent in the circumferential direction. In this example, the number of the protrusions 27 is half the number of poles, and the positions of the protrusions 27 in the circumferential direction coincide with the pole centers of the second magnetic poles P2, but the number and arrangement of the protrusions 27 are not limited thereto.

As illustrated in FIG. 1, a sensor magnet 24 is disposed to face the rotor core 20 in the axial direction. The sensor magnet 24 is held by the resin part 25. The sensor magnet 24 has magnetic poles, the number of which is the same as the number of poles of the rotor 2. The magnetic field of the sensor magnet 24 is detected by a magnetic sensor mounted on the circuit board 6, by which the position of the rotor 2 in the circumferential direction, i.e., the rotational position of the rotor 2 is detected.

The rotor 2 is not limited to the configuration in which the rotor core 20 and the rotation shaft 11 are connected together by the resin part 25 as described above. For example, the rotation shaft 11 may be fitted to the inner circumference of the rotor core 20.

### (Configuration of Mold Stator 5)

The mold stator 5 has the stator 3 and the mold resin part 50 as described above. The stator 3 surrounds the rotor 2 from outside in the radial direction. The stator 3 has a stator core 30, insulators 40 as resin components provided on the stator core 30, and coils 45 wound on the stator core 30 via the insulators 40.

The mold resin part 50 is desirably composed of a thermosetting resin such as a bulk molding compound (BMC). However, the mold resin part 50 may be composed of a thermoplastic resin such as PBT or polyphenylene sulfide (PPS).

The mold resin part 50 has a bearing holding portion 56 on the counter-load side and an opening 57 on the load side. A rotor housing portion 59, which is a space where the rotor 2 is housed, is formed between the bearing holding portion 56 and the opening 57. The rotor 2 is inserted into the rotor housing portion 59 through the opening 57.

One bearing 13 that supports the rotation shaft 11 is supported by the bearing holding portion 56 of the mold resin part 50. A metal bracket 15 is attached to a peripheral edge 57a surrounding the opening 57. The other bearing 12 that supports the rotation shaft 11 is held by the bracket 15. A cap 14 for preventing the entry of water or the like is attached to the outside of the bracket 15.

FIG. 3 is a plan view illustrating the stator core 30. The stator core 30 is composed of a plurality of electromagnetic steel sheets which are stacked in the axial direction and fastened to each other in the axial direction by crimping or the like. The sheet thickness of each electromagnetic steel sheet is, for example, 0.1 mm to 0. 7 mm.

The stator core 30 has a core back 31 having an annular shape about the axis C1 and a plurality of teeth 32 extending inward in the radial direction from the core back 31. The teeth 32 are arranged at equal intervals in the circumferential direction. A tip end 32a of each tooth 32 on an inner side in the radial direction faces an outer circumference of the rotor 2

(FIG. 1). The number of the teeth 32 is 12 in this example, but is not limited to 12.

Slots 34 for housing the coils 45 are formed each between adjacent two teeth 32. A slot opening S is formed on the inner side of each slot 34 in the radial direction. The slot opening S is formed between the tip ends 32a of the adjacent teeth 32 .

The stator core 30 is divided into a plurality of split cores 33 each including one tooth 32. An arc-shaped portion of the annular core back 31 that is included in each split core 33 is referred to as a core-back part 31A. The number of split cores 33 is 12 in this example, but it is sufficient that the number of split cores 33 is the same as the number of teeth 32.

Split cores 33 that are adjacent in the circumferential direction are not connected to each other. That is, a gap is formed between ends 313 of adjacent core-back parts 31A in the circumferential direction. The gap is referred to as a core-back gap G. The core-back gaps G are gaps by which the annular core back 31 are divided into the plurality of core-back parts 31A.

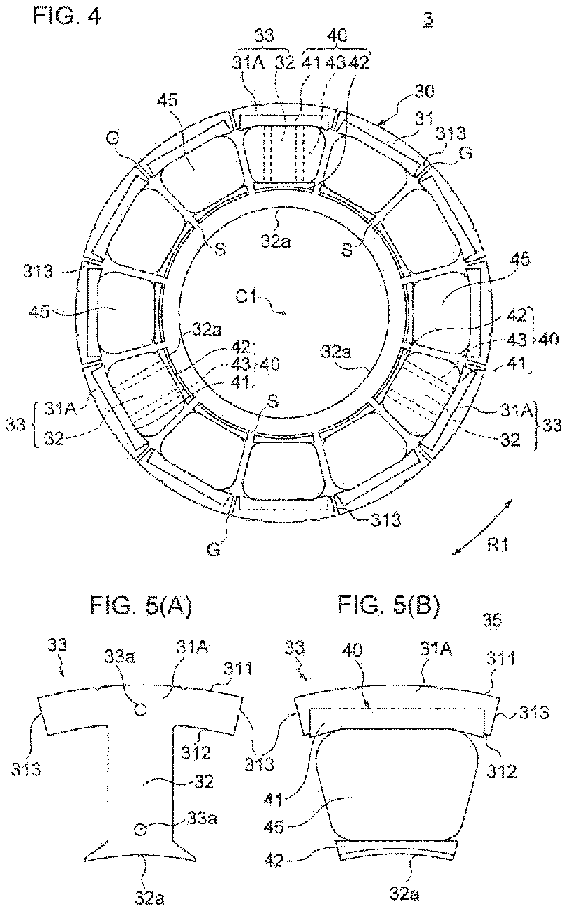

FIG. 4 is a diagram illustrating a state in which the insulators 40 are attached to the split cores 33 of the stator core 30, and the coils 45 are wound around the insulators 40. In FIG. 4, three of the twelve teeth 32 of the stator 3 are indicated by dashed lines.

Each insulator 40 has a body portion 43 as a coil winding portion formed to surround the tooth 32, a wall portion 41 located on the outer side of the body portion 43 in the radial direction, and a flange portion 42 located on the inner side of the body portion 43 in the radial direction. The wall portion 41, the flange portion 42, and the body portion 43 are formed integrally.

The wall portion 41 and the flange portion 42 face each other in the radial direction. The wall portion 41 and the flange portion 42 guide the coil 45 wound around the body portion 43, from both sides of the coil 45 in the radial direction.

The coil 45 is, for example, a magnet wire, and is wound around the tooth 32 via the insulator 40. A portion of the coil 45 that is wound around each tooth 32 is also referred to as a winding portion.

The insulator 40 is composed of a thermoplastic resin such as PBT, for example. The insulator 40 is formed by, for example, assembling a molded body of a thermoplastic resin to the stator core 30, but may be formed by molding a thermoplastic resin integrally with the stator core 30.

With reference to FIG. 1 again, the circuit board 6 is disposed on the counter-load side of the stator 3. The circuit board 6 is a printed board on which a driving circuit 61, such as a power transistor for driving the motor 1, is mounted. Lead wires 63 are wired on the circuit board 6. The lead wires 63 on the circuit board 6 are drawn to the outside of the motor 1 through a lead wire outlet part 62 attached to an outer circumferential portion of the mold resin part 50.

A heat dissipation member 7 is attached to the mold resin part 50. The heat dissipation member 7 dissipates heat generated in the stator 3 and the circuit board 6, to the outside. A description of the heat dissipation member 7 is omitted.

FIG. 5 (A) is a plan view illustrating the split core 33. As illustrated in FIG. 5(A), the core-back part 31A of the split core 33 has an outer circumference 311 on the outer side in the radial direction, an inner circumferential surface 312 on the inner side in the radial direction, and the ends 313 on both sides in the circumferential direction.

The split core 33 is composed of a stacked body of a plurality of electromagnetic steel sheets which are stacked in the axial direction and fastened together by crimping portions 33a. The crimping portions 33a are formed, for example, in the core-back part 31A and the tooth 32, but they are not limited to such positions. In the figures other than FIG. 5(A), the crimping portions 33a are omitted.

FIG. 5(B) is a plan view illustrating a state in which the insulator 40 and the coil 45 are attached to the split core 33. The split core 33, the insulator 40, and the coil 45 constitute a split core unit 35.

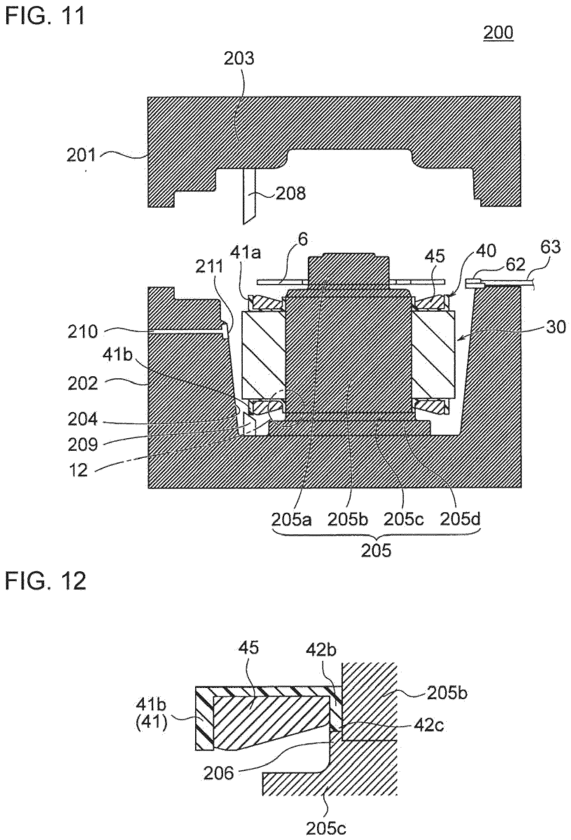

Each split core unit 35 can be handled independently. Twelve split core units 35 are placed in a mold 200 (FIG. 11) and integrally molded using a mold resin together with the circuit board 6, so that the mold stator 5 illustrated in FIG. 1 is obtained.

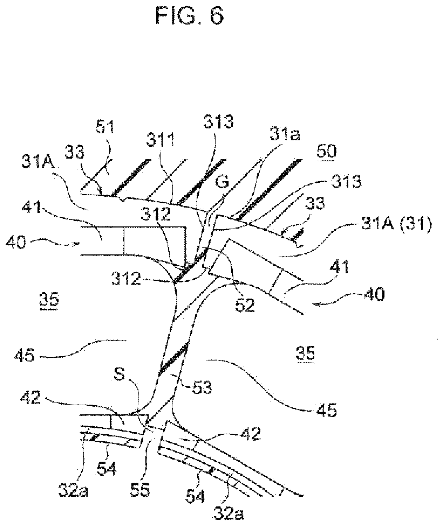

FIG. 6 is an enlarged diagram illustrating two adjacent split core units 35. As described above, the core-back gap G is formed between the ends 313 of the adjacent two core-back parts 31A. The slot opening S is formed between the tip ends 32a of the adjacent two teeth 32.

The mold resin part 50 reaches an inner side of the core back 31 in the radial direction from an outer side of the core back 31 in the radial direction through the core-back gap G.

More specifically, the mold resin part 50 has an outer circumferential resin portion 51 covering the outer circumference 311 of the core-back part 31A, a gap resin portion 52 located in the core-back gap G, and an in-slot resin portion 53 located between adjacent winding portions of the coils 45.

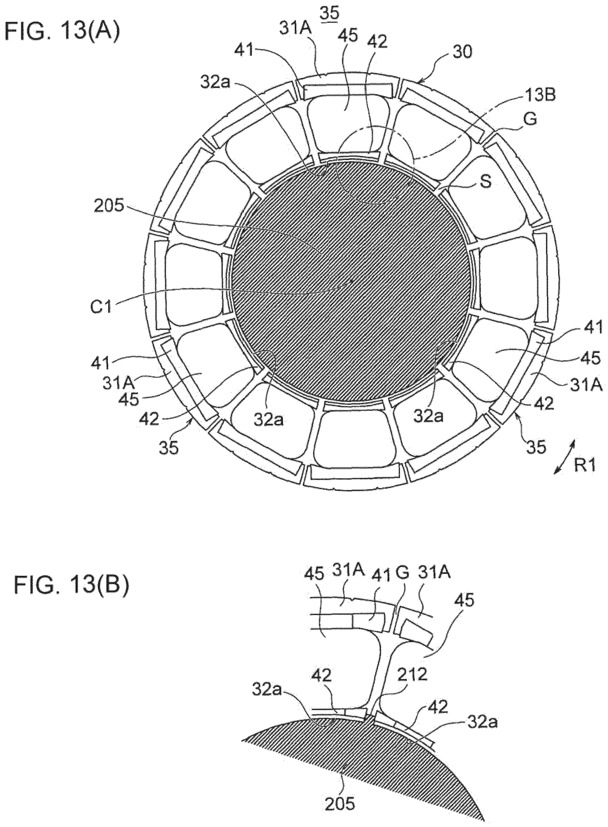

The in-slot resin portion 53 of the mold resin part 50 reaches the slot opening S. A recess 55 is formed at the end of the in-slot resin portion 53 on the inner side in the radial direction. The recess 55 is formed by rib 212 (FIG. 13(B)) of the mold 200 during molding as described below.

A surface resin layer 54 is formed on a surface of the tip end 32a of the tooth 32, i.e., an end surface of the tooth 32 on the inner side in the radial direction. The surface resin layer 54 is formed because a part of the mold resin flows onto the surface of the tip end 32a of the tooth 32 during molding.

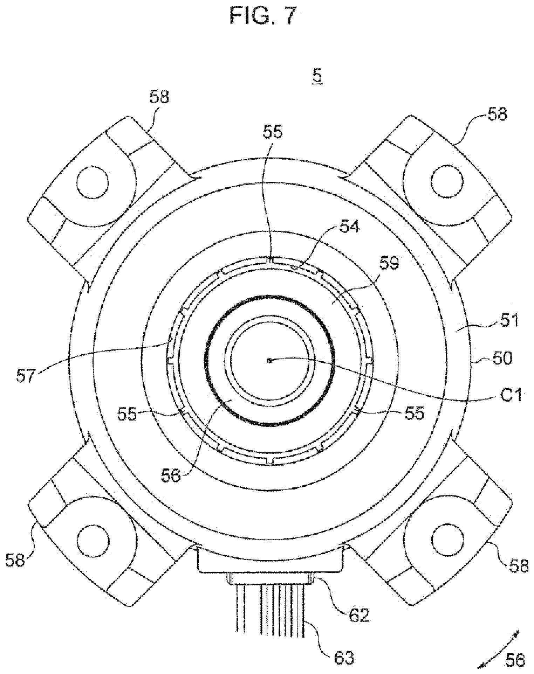

FIG. 7 is a diagram illustrating the mold stator 5 as viewed from the opening 57 side. When the mold stator 5 is viewed from the opening 57 side, the surface resin layers 54 are seen around the rotor housing portion 59 inside the mold resin part 50. Further, the recesses 55 are seen adjacent to the surface resin layers 54.

Attachment legs 58 are formed at the outer circumference of the mold resin part 50. In this example, four attachment legs 58 are formed at of 90 degrees about the axis C1. In this regard, the number of attachment legs 58 is not limited to four. It is sufficient that the number of attachment legs 58 is one or more. Each attachment leg 58 is provided with a hole through which a screw for fixing the motor 1 to a frame of an air conditioner or the like is inserted.

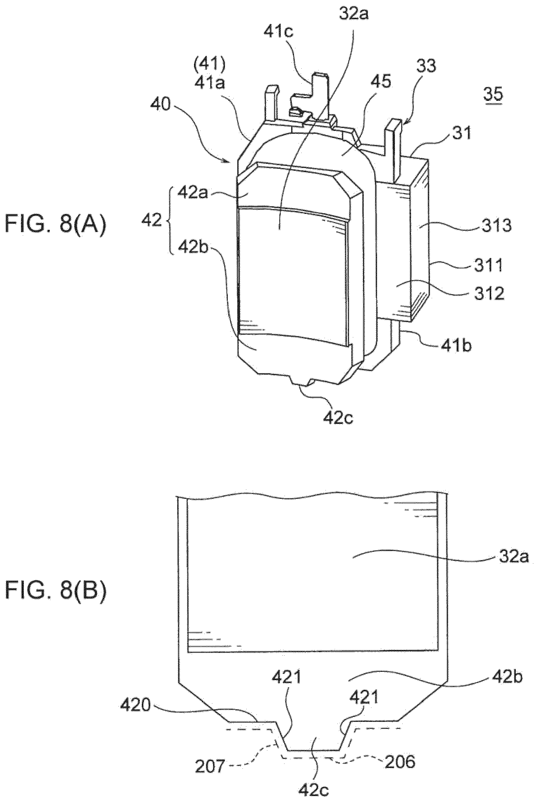

FIG. 8(A) is a perspective view illustrating the split core unit 35. The wall portion 41 of the insulator 40 is provided at each end of the core-back part 31A in the axial direction. The wall portion 41 provided at one end of the core-back part 31A in the axial direction is referred to as a wall portion 41a, while the wall portion 41 provided at the other end thereof is referred to as a wall portion 41b.

The side on which the wall portion 41a is provided in the axial direction is a side where the circuit board 6 (FIG. 1) is attached. A terminal 41c connected to the coil 45, or a pin inserted into an attachment hole of the circuit board 6 is disposed at the wall portion 41a of the insulator 40.

The flange portion 42 of the insulator 40 has a flange portion 42a protruding from the tip end 32a of the tooth 32 toward one side in the axial direction and a flange portion 42b protruding from the tip end 32a toward the other side in the axial direction. In the axial direction, the flange portion 42a is located on the same side as the wall portion 41a, while the flange portion 42b is located on the same side as the wall portion 41b.

FIG. 8(B) is a diagram illustrating the flange portion 42b as viewed from its inner side in the radial direction, i.e., the rotor 2 (FIG. 1) side. The flange portion 42b has a protrusion 42c at an end surface 420 in the axial direction (at the lower surface in FIG. 8(B)).

The protrusion 42c has support surfaces 421 on both sides thereof in the circumferential direction. Each support surface 421 is inclined with respect to the circumferential direction and the axial direction. More specifically, the support surface 421 is inclined so as to be displaced inward of the protrusion 42c in the circumferential direction as the distance from the end surface 420 in the axial direction increases.

The protrusion 42c of the flange portion 42 is engaged with a positioning recess 206 of the mold 200 (FIG. 11) during molding. The positioning recess 206 has contact surfaces 207 corresponding to the support surfaces 421 of the protrusion 42c.

By contact between the support surfaces 421 of the protrusion 42c and the contact surfaces 207 of the positioning recess 206, the split core unit 35 can be positioned in the circumferential direction when the split core units 35 are placed in the mold 200.

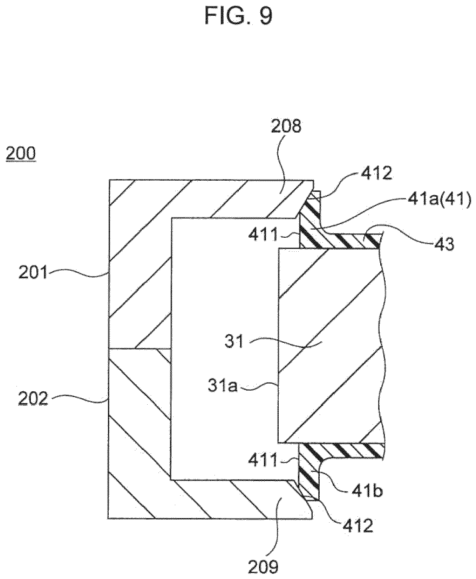

FIG. 9 is a schematic diagram for explaining the shapes of the wall portions 41a and 41b of the insulator 40. Each of the wall portions 41a and 41b has a tapered surface 412 as a contact surface at its end in the axial direction.

The tapered surfaces 412 are formed from the ends in the axial direction of the wall portions 41a and 41b to outer wall surfaces 411 in the radial direction of the wall portions 41. Each tapered surface 412 is inclined with respect to the radial direction and the axial direction. More specifically, the tapered surface 412 is inclined so as to be displaced inward in the radial direction as the distance from the core-back part 31A in the axial direction increases.

The tapered surfaces 412 of the wall portions 41a and 41b are brought into contact with contact positioning pins 208 and 209 of the mold 200 during molding. Each of the positioning pins 208 and 209 has an inclined surface corresponding to the tapered surface 412.

The tapered surfaces 412 of the insulator 40 are brought into contact with the positioning pins 208 and 209 of the mold 200, so that the split core unit 35 is pressed inward in the radial direction. Thus, the tip end 32a of the tooth 32 is pressed against a center shaft 205 (FIG. 11) of the mold 200, and thus the positioning accuracy of the tooth 32 in the radial direction can be improved.

In this regard, it is sufficient that the tapered surface 412 is formed in at least a portion in the circumferential direction of at least one of the ends of the wall portion 41a and 41b in the axial direction. In FIG. 9, the positioning pins 208 and 209 of the mold 200 is schematically illustrated. The specific shapes of the positioning pins 208 and 209 are illustrated in FIG. 11 to be described later.

### (Manufacturing Method of Motor 1)

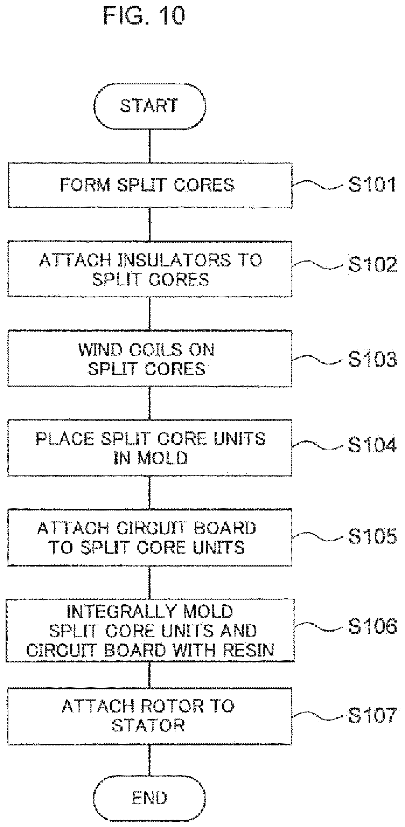

Next, a manufacturing method of the motor 1 will be described. FIG. 10 is a flowchart illustrating a manufacturing process of the motor 1.

In the manufacturing process of the motor 1, first, a plurality of stacking elements are stacked in the axial direction and integrally fixed together by crimping or the like, thereby forming the split cores 33 (step S101).

Then, a preliminarily molded insulator 40 is attached to each split core 33 (step S102). Further, the coil 45 is wound on the split core 33 via the insulator 40 (step S103). In this way, the split core unit 35 is formed.

Twelve split core units 35 formed as above are placed in the mold 200 for molding. This step corresponds to a step of placing the stator core 30 in the mold 200.

FIG. 11 is a sectional view illustrating the mold 200 used in the molding step. As illustrated in FIG. 11, the mold 200 includes an upper mold 201 and a lower mold 202. A cavity 204 is formed between both molds 202 and 204.

The upper mold 201 is movable in the direction toward and away from the lower mold 202, here in the vertical direction. In the state illustrated in FIG. 11, the upper mold 201 is in a position (upper position) apart from the lower mold 202 to make the cavity 204 open.

The lower mold 202 has a center shaft 205 as the center core in the cavity 204. The center shaft 205 protrudes in the axial direction from the bottom of the cavity 204. The center shaft 205 has a bearing-shaped portion 205a corresponding to the bearing 13 (FIG. 1), a core-shaped portion 205b corresponding to the rotor core 20 (FIG. 1), a step portion 205c corresponding to the opening 57 (FIG. 1), and a large-diameter portion 205d corresponding to the peripheral edge 57a (FIG. 1) around the opening 57.

The lower mold 202 is provided with a runner 210, which is a flow path for molten resin injected into the cavity 204, and a gate 211, which is an inlet for molten resin injected from the runner 210 into the cavity 204.

The twelve split core units 35 are placed in the cavity 204 of the lower mold 202. These twelve split core units 35 are arranged around the center shaft 205 of the mold 200 as illustrated in FIG. 11.

FIG. 12 is an enlarged diagram illustrating a part enclosed by a circle 12 in FIG. 11. The positioning recess 206 is formed in the step portion 205c of the lower mold 202. The positioning recess 206 is engaged with the protrusion 42c of the flange portion 42b as described with reference to FIG. 8(B).

By the engagement between the positioning recesses 206 and the protrusions 42c of the flange portions 42b, the split core units 35 placed in the cavity 204 are positioned in the circumferential direction. The positioning recesses 206, the number of which is the same as the number of split core units 35, are desirably provided at equal intervals in the circumferential direction.

FIG. 13 is a diagram, illustrating a state in which the split core units 35 are arranged around the center shaft 205 as viewed from the upper mold 201 side. The tip ends 32a of the teeth 32 of the split core units 35 are brought into contact with an outer circumferential surface of the center shaft 205, i.e., the positioning surface. Thus, the tip ends 32a of the teeth 32 can be positioned in the radial direction with high accuracy.

Ribs 212 (FIG. 13(B)) are formed on the outer circumference of the center shaft 205 is provided with the ribs 212. Each rib 212 is engaged between the tip ends 32a of the adjacent teeth 32. The ribs 212, the number of which is the same as the number of split core units 35, are desirably provided at equal intervals in the circumferential direction. With these ribs 212, the split core units 35 can be positioned in the circumferential direction.

Each rib 212 may be formed in a rail shape elongated in the axial direction. Alternatively, each rib 212 may be formed of a plurality of protrusions that are formed at intervals in the axial direction.

The circuit board 6 is placed on the split core units 35 disposed in the cavity 204 as above (step S105).

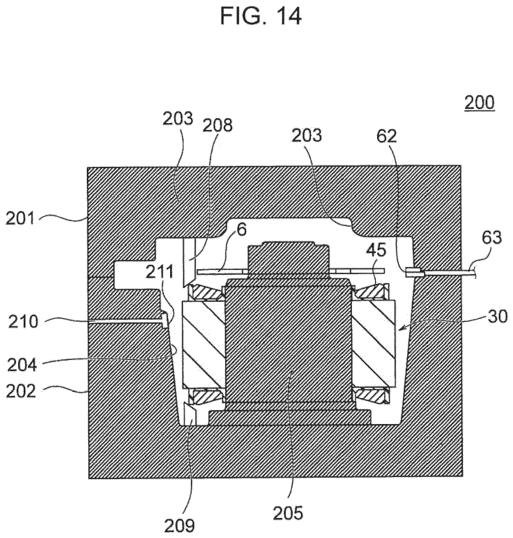

Then, the upper mold 201 of the mold 200 is moved downward to close the cavity 204 as illustrated in FIG. 14, and integral molding is performed with a mold resin (step S106).

The upper mold 201 and the lower mold 202 are provided with the positioning pins 208 and 209 as the positioning portions that protrude inside the cavity 204. The positioning pins 208 and 209 are brought into contact with the tapered surfaces 412 (FIG. 9) of the wall portions 41a and 41b of the insulators 40 so as to press the split core units 35 inward in the radial direction.

Thus, the tip ends 32a of the teeth 32 can be brought into contact with the center shaft 205 more surely. The positioning pins 208, the number of which is the same as the number of split core units 35, are desirably provided at equal intervals in the circumferential direction. The positioning pins 209, the number of which is the same as the number of split core units 35, are desirably provided at equal intervals in the circumferential direction.

Then, a mold resin in a molten state is injected into the cavity 204 through the runner 210 and the gate 211. The mold resin injected into the cavity 204 covers the split core units 35 and the circuit board 6 and further covers the outer circumference side of the bearing holding portion 56. This step S106 corresponds to a step of molding the stator core 30 integrally with the mold resin.

In a case where a thermosetting resin such as BMC is used as the mold resin, the mold resin is injected into the cavity 204, and then the mold 200 is heated so as to harden the mold resin in the cavity 204. In this way, the mold resin part 50 is formed. That is, the mold stator 5 in which the split core units 35 and the circuit board 6 are covered with the mold resin part 50 is formed.

Aside from steps S101 to S106, the rotor 2 is assembled. That is, a plurality of stacking elements are stacked in the axial direction and integrally fixed together by crimping or the like, thereby forming the rotor core 20. Then, the magnets 23 are inserted in the magnet insertion holes 21. Furthermore, the rotation shaft 11, the rotor core 20, the magnets 23, and the sensor magnet 24 are formed integrally with a resin which is to be the resin part 25. Thereafter, the bearings 12 and 13 are attached to the rotation shaft 11, and the rotor 2 is completed.

Then, the rotor 2 is inserted into the rotor housing portion 59 through the opening 57 of the mold stator 5, and the bracket 15 is fitted to the peripheral edge 57a of the opening 57 (step S107). Thus, the bearing 13 is attached to the bearing holding portion 56, while the bearing 12 is attached to the bracket 15. Further, the cap 14 is attached to the outside of the bracket 15. Consequently, the motor 1 is completed.

Of steps S101 to S107 described above, steps S101 to S106 correspond to the manufacturing process of the stator 3 and also correspond to the manufacturing process of the mold stator 5.

### (Function)

Conventionally, there is a stator core in which a plurality of split cores are connected together by thin-wall portions, for the purpose of facilitating winding of coils. With this configuration, the mutual positional relationship between the split cores is determined by the thin-wall portions, and thus the tip ends of all the teeth cannot be pressed against the positioning surface of the mold. Accordingly, there tends to be variation in the positions of the tip ends of the teeth in the radial direction. Therefore, the air gap between the stator and the rotor may be non-uniform in the circumferential direction.

In contrast, in the motor 1 of the first embodiment, the plurality of split cores 33 constituting the stator core 30 are not connected by thin-wall portions, but are separated from each other via the core-back gaps G. Thus, the tip ends 32a of all the teeth 32 can be brought into contact with the outer circumferential surface of the center shaft 205 when the plurality of split core units 35 are placed in the mold 200.

Thus, the tip ends 32a of all the teeth 32 can be positioned in the radial direction with high accuracy. Accordingly, the air gap between the stator 3 and the rotor 2 can be made uniform in the circumferential direction, and vibration and noise can be reduced.

The mold resin part 50 reaches the inner side of the core back 31 in the radial direction from the outer side of the core back 31 in the radial direction through the core-back gaps G, and thus it is possible to suppress a reduction in the rigidity due to the division of the core back 31 through the core-back gaps G.

In particular, in the motor 1 having the consequent-pole rotor 2, the first magnetic pole P1, which is the magnet magnetic pole, and the second magnetic pole P2, which is the virtual magnetic pole, differ in the inductance, and thus vibration and noise tend to increase. However, in the first embodiment, the air gap between the stator 3 and the rotor 2 can be made uniform in the circumferential direction, and thus a large effect is obtained in reducing vibration and noise in the motor 1 having the consequent-pole rotor 2.

The mold resin part 50 has the recesses 55 in the slot opening S. The recesses 55 are formed because the ribs 212 of the center shaft 205 of the mold 200 are engaged between the tip ends 32a of the adjacent teeth 32 of the stator core 30 during molding. With these ribs 212, the teeth 32 can be positioned in the circumferential direction.

The insulator 40 has the protrusion 42c, and the protrusion 42c has the support surfaces 421. The support surfaces 421 of the protrusion 42c is brought into contact with the contact surfaces 207 of the positioning recess 206 of the mold 200, and thus each split core unit 35 can be positioned in the circumferential direction. Thus, the positioning accuracy of each tooth 32 in the circumferential direction can be improved.

The protrusion 42c of the insulator 40 is engaged with the positioning recess 206 of the mold 200 during molding and thus is not covered with the mold resin. Thus, after the molding, the protrusion 42c is exposed to the outside from the mold resin part 50. For this reason, the protrusion 42c of the insulator 40 is also referred to an exposed portion.

Although the protrusion 42c is provided on the flange portion 42 of the insulator 40 in this example, the protrusion 42c may be provided on any other portions of the insulator 40. Further, the protrusion 42c is not necessarily provided on the insulator 40, but may be provided on any resin component attached to the split core 33.

The tapered surfaces 412 as the contact surfaces are formed at the ends of the wall portions 41a and 41b of the insulator 40 in the axial direction. The tapered surfaces 412 are brought into contact with the positioning pins 208 and 209 of the mold 200, thereby pressing the split core units 35 toward the center shaft 205. Thus, each tooth 32 can be more surely pressed against the center shaft 205, and thus the positioning accuracy of each tooth 32 in the radial direction can be improved.

The tapered surfaces 412 of the insulator 40 are brought into contact with the positioning pins 208 and 209 of the mold 200 during molding and thus are not covered with the mold resin. Thus, after the molding, each tapered surfaces 412 is exposed to the outside from the mold resin part 50. For this reason, the tapered surface 412 is also referred to the exposed portion.

Although the tapered surface 412 is provided in each of the wall portions 41a and 41b of the insulator 40 in this example, the tapered surface 412 may be provided in any other portions of the insulator 40. Further, the tapered surface 412 is not necessarily provided on the insulator 40, but may be provided on any resin component attached to the split core 33.

A gate mark is left on the outer circumferential portion of the mold resin part 50, and the gate mark has a shape corresponding to the gate 211 of the mold 200. Since the mold resin flows from the gate 211 of the mold 200 toward each split core units 35, the split core units 35 are pressed toward the center shaft 205 side due to the pressure of the mold resin. Thus, the positioning accuracy of each tooth 32 in the radial direction can be further improved.

The volume of a portion of the mold resin part 50 that is located on the outer side in the radial direction with respect to the stator core 30 is represented by V1, while the volume of a portion of the mold resin part 50 that is located on the inner side in the radial direction with respect to the stator core 30 is represented by V2. More specifically, the volume VI is a volume of the outer circumferential resin portion 51 illustrated in FIG. 6, while the volume V2 is a volume of the surface resin layer 54 illustrated in FIG. 6. The volumes V1 and V2 do not include a portion protruding from the stator core 30 in the axial direction (for example, the bearing holding portion 56).

In this example, as can be seen from FIG. 6, the volumes V1 and V2 satisfy V1 > V2. That is, within the mold 200, the amount of mold resin located on the outer side in the radial direction with respect to the split core 33 is larger than the amount of mold resin located on the inner side in the radial direction with respect to the split core 33. Thus, the split cores 33 are pressed toward the center shaft 205 side by the pressure of the mold resin, so that the positioning accuracy of each tooth 32 in the radial direction is further improved.

In this example, the annular core back 31 is divided into the plurality of core-back parts 31A via the core-back gaps G. However, the first embodiment is not limited to such a configuration. It is sufficient that the core-back gap G is formed so as to pass in the radial direction through at least a part of the core back 31 in the circumferential direction.

### (Effects of Embodiment)

As described above, the stator 3 of the first embodiment has the stator core 30 having the core back 31 and the teeth 32, and the mold resin part 50 surrounding the stator core 30 from outside in the radial direction. The stator core 30 has the core-back gap G which passes in the radial direction through at least a part of the core back 31 in the circumferential direction. The mold resin part 50 reaches the inner side of the core back 31 in the radial direction from the outer side of the core back 31 in the radial direction through the core-back gap G.

Since the core-back gap G is formed to pass in the radial direction through at least a part of the core back 31 in the circumferential direction as above, the molding can be performed by pressing the tip ends 32a of the teeth 32 against the outer circumferential surface (the positioning surface) of the center shaft 205 of the mold 200. Thus, the tip ends 32a of the teeth 32 can be positioned in the radial direction with high accuracy, and therefore the air gap between the stator 3 and the rotor 2 can be made uniform in the circumferential direction. Since the mold resin part 50 holds the core back 31 from both the outer side and the inner side in the radial direction, a reduction in the rigidity of the stator core 30 can be suppressed. As a result, vibration and noise of the motor 1 can be reduced.

The mold resin part 50 has the recess 55 in the slot opening S. The recess 55 is formed because the rib 212 of the mold 200 is engaged between the tip ends 32a of the adjacent teeth 32. Since the rib 212 of the mold 200 is engaged between the tip ends 32a of the adjacent teeth 32, each tooth 32 can be positioned in the circumferential direction.

Since the insulator 40 as the resin component has the protrusion 42c having the support surfaces 421 in the circumferential direction, each split core unit 35 can be positioned in the circumferential direction by the contact between the support surfaces 421 and the contact surfaces 207 of the mold 200. Thus, the positioning accuracy of each tooth 32 in the circumferential direction can be improved.

In addition, since the wall portions 41a and 41b have the tapered surfaces 412 as the contact surfaces at their ends in the axial direction, each split core unit 35 can be positioned in the radial direction, and thus each tooth 32 can be positioned in the radial direction.

A gate mark is formed on the outer circumference of the mold resin part 50. This is because the gate 211 is disposed in the position facing the outer circumference of the split core 33 in the cavity 204 of the mold 200. Thus, each split core unit 35 can be pressed toward the center shaft 205 side by the pressure of the mold resin flowing through the gate 211, and the positioning accuracy of each tooth 32 in the radial direction can be improved.

In the mold resin part 50, the volume V1 of the portion located on the outer side in the radial direction with respect to the stator core 30 and the volume V2 of the portion located on the inner side in the radial direction with respect to the stator core 30 satisfy V1 > V2. Thus, the amount of mold resin located on the outer side in the radial direction with respect to each split core 33 is larger than the amount of mold resin located on the inner side in the radial direction with respect to each split core 33 within the mold 200. Therefore, each split core 33 can be pressed toward the center shaft 205 side by the pressure of the mold resin, and thus the positioning accuracy of each tooth 32 in the radial direction can be further improved.

In the motor 1 having the consequent-pole rotor 2, vibration and noise tend to be large. Thus, by making the air gap between the stator 3 and the rotor 2 uniform in the circumferential direction, a large effect is obtained in reducing vibration and noise.

### Second Embodiment

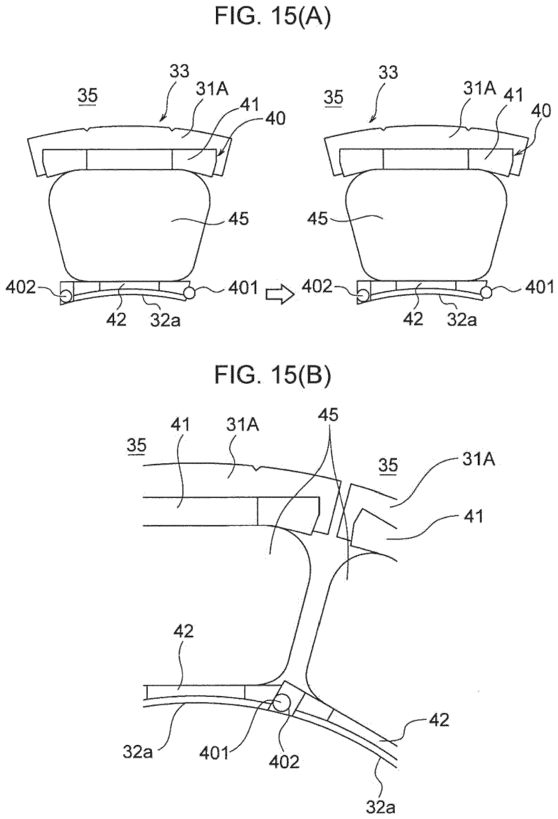

Next, a second embodiment will be described. FIG. 15(A) is a diagram illustrating two split core units 35 that are adjacent in the circumferential direction in a stator 3 of the second embodiment.

As described in the first embodiment, the split core unit 35 has the split core 33, the insulator 40, and the coil 45. The insulator 40 has the wall portion 41, the flange portion 42, and the body portion 43 (FIG. 4).

In the second embodiment, a convex portion 401 and a concave portion 402 are provided on the flange portion 42 of the insulator 40 of each split core unit 35.

The convex portion 401 protrudes in the circumferential direction from one end of the flange portion 42 in the circumferential direction. The concave portion 402 is opened at the other end of the flange portion 42 in the circumferential direction. Each of the convex portion 401 and the concave portion 402 has, for example, a circular shape in a plane orthogonal to the axial direction.

When two split core units 35 are assembled as indicated by the arrow, the convex portion 401 of one split core unit 35 is engaged with the concave portion 402 of its adjacent split core unit 35 as illustrated in FIG. 15(B).

Although FIGS. 15(A) and 15(B) illustrate the two split core units 35, each of the insulators 40 of all the split core units 35 of the stator 3 has the convex portion 401 and the concave portion 402. Thus, when all the split core units 35 of the stator core 30 are assembled in an annular shape, the convex portion 401 of each split core unit 35 is engaged with the concave portion 402 of the adjacent split core unit 35.

This makes it possible to temporarily fix the split core units 35 in a state where the split core units 35 are assembled in an annular shape and to handle the split core units 35 integrally. That is, in the manufacturing process of the stator 3, an operation to place the split core units 35 in the mold 200 and other operations can be performed easily.

The convex portion 401 and the concave portion 402 are desirably engaged each other with some clearance therebetween. This is in order not to prevent the tip ends 32a of the teeth 32 from contacting the outer circumferential surface of the center shaft 205 when the split core units 35 are placed in the mold 200.

Each of the convex portion 401 and the concave portion 402 has a circular shape in a plane orthogonal to the axial direction in this example, but may have any other shape as long as the convex portion 401 is engaged with the concave portion 402.

The convex portion 401 and the concave portion 402 may be provided in only one of the flange portions 42a and 42b illustrated in FIG. 8 (A) or may be provided in both of the flange portions 42a and 42b.

The convex portion 401 and the concave portion 402 may be provided not only on the flange portion 42, but may also be provided on the wall portion 41. Further, the convex portion 401 and the concave portion 402 are not necessarily provide on the insulator 40, but may be provided on any resin component attached to the split core 33.

The stator 3 of the second embodiment is configured in a similar manner to the stator 3 of the first embodiment except for the points described above.

In the second embodiment described above, the insulator 40 attached to each split core 33 has the convex portion 401 and the concave portion 402. Thus, by engagement between the convex portion 401 of each insulator 40 and the concave portion 402 of its adjacent insulator 40, the plurality of split cores 33 can be handled integrally. Thus, the manufacturing process of the stator 3 can be simplified.

### Third Embodiment

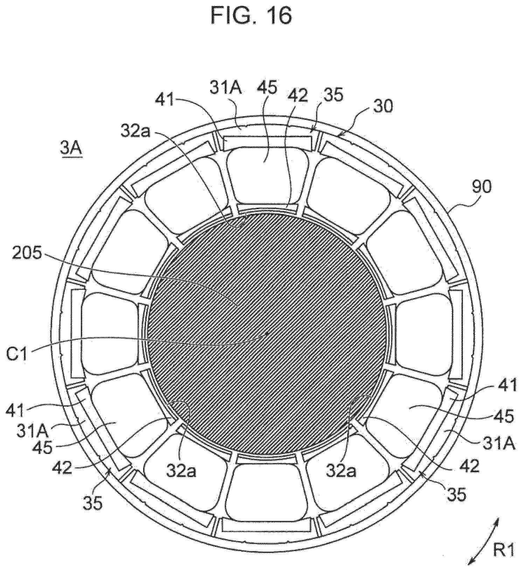

Next, a third embodiment will be described. FIG. 16 is a diagram illustrating a stator 3A of the third embodiment together with the center shaft 205 of the mold 200.

The stator 3A of the third embodiment has a ring-shaped outer circumference holding member 90 on the outer side of the stator core 30 in the radial direction. The outer circumference holding member 90 holds the split cores 33, which are arranged in an annular shape around the center shaft 205 of the mold 200, from outside in the radial direction.

The outer circumference holding member 90 functions to press the split cores 33 against the center shaft 205. This makes it possible to prevent the misalignment of each split core 33 during molding.

The outer circumference holding member 90 is composed of a material that has a lower modulus of elasticity than that of the electromagnetic steel sheet of the split core 33, i.e., a material that is more elastically deformable than the electromagnetic steel sheet. Specifically, the outer circumference holding member 90 is composed of an elastic material such as rubber, for example. Thus, the outer circumference holding member 90 can be attached to the outside of the split cores 33 in a state where the outer circumference holding member 90 is pressed and expanded. The split cores 33 can be pressed toward the center shaft 205 using an elastic force of the outer circumference holding member 90.

The stator 3A of the third embodiment is configured in a similar manner to the stator 3 of the first embodiment except for the points described above.

As described in the second embodiment, the insulator 40 may be provided with the convex portion 401 and the concave portion 402 (FIG. 15).

The stator 3A of the third embodiment has the outer circumference holding member 90 that covers the split cores 33 from outside in the radial direction as described above. Thus, each split cores 33 of the stator core 30 can be pressed against the center shaft 205 of the mold 200, and the misalignment of each split core 33 during molding can be effectively prevented.

### Fourth Embodiment

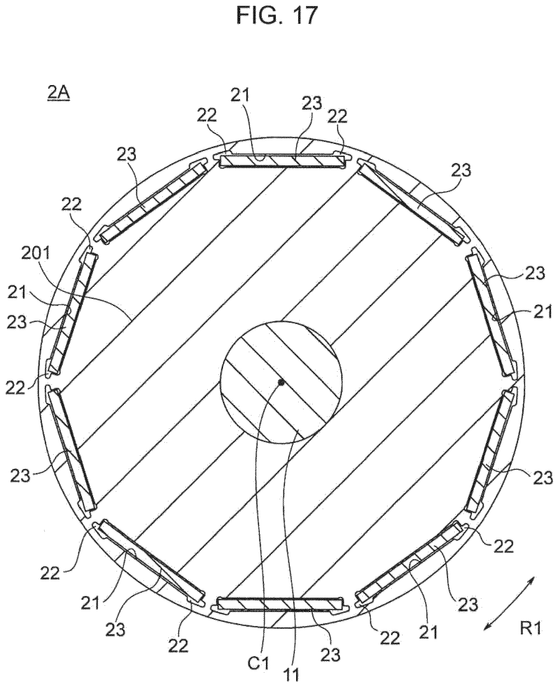

FIG. 17 is a sectional view illustrating a rotor 2A of a fourth embodiment. The rotors 2 of the above-described first to third embodiments are of the consequent-pole type having the magnet magnetic poles and the virtual magnetic poles. In contrast, the rotor 2A of the fourth embodiment is of a non-consequent-pole type in which all the magnetic poles are formed of magnet magnetic poles.

The rotor 2A includes a rotor core 20A having a cylindrical shape about the axis C1. The rotor core 20A is formed of a plurality of stacking elements that are stacked in the axial direction and integrally fixed together by crimping, welding, bonding, or the like. The stacking elements are, for example, electromagnetic steel sheets, each having a thickness of 0.1 mm to 0.7 mm. The rotor core 20A has a central hole at its center in the radial direction, and the rotation shaft 11 is fixed to the center hole.

A plurality of magnet insertion holes 21 are formed along an outer circumference of the rotor core 20A. The magnet insertion holes 21 are arranged at equal intervals in the circumferential direction. The shape of each magnet insertion hole 21 is as described in the first embodiment. The flux barrier 22 is formed on each side of the magnet insertion hole 21 in the circumferential direction. The number of magnet insertion holes 21 is ten in this example, but is not limited to ten.

The magnet 23 is inserted in each magnet insertion hole 21. The magnet 23 is in the form of a flat plate and has a rectangular cross-sectional shape in a plane orthogonal to the axial direction. The material and shape of the magnet 23 are as described in the first embodiment.

The magnets 23 adjacent in the circumferential direction are disposed so that opposite magnetic poles face the outer circumference side of the rotor core 20A. Thus, all the magnetic poles of the rotor 2A are formed of the magnets 23. In this example, the rotor 2A has ten magnets 23, and the number of magnetic poles of the rotor 2A is ten.

The non-consequent-pole rotor 2A has more magnets 23 than the consequent-pole rotor 2, but has an advantage that vibration and noise are less likely to occur.

The motor of the fourth embodiment is configured in a similar manner to the motor 1 of the first embodiment except that the rotor 2A is of the non-consequent-pole type. The non-consequent-pole rotor 2A of the fourth embodiment may be combined with the stator 3 described in the second or third embodiment.

Even when the non-consequent-pole rotor 2A is used as described above, the use of the stator 3 of any one of the first to third embodiments makes the air gap between the rotor 2A and the stator 3 uniform in the circumferential direction, and thus vibration and noise can be reduced.

### (Air Conditioner)

Next, an air conditioner to which the motor 1 of each of the above-described embodiments is applicable will be described. FIG. 18(A) is a diagram illustrating the configuration of an air conditioner 500 to which the motor 1 of the first embodiment is applied. The air conditioner 500 includes an outdoor unit 501, an indoor unit 502, and a refrigerant pipe 503 connecting these units 501 and 502.

The outdoor unit 501 includes an outdoor fan 510 which is, for example, a propeller fan. The indoor unit 502 includes an indoor fan 520 which is, for example, a cross flow fan. The outdoor fan 510 has the impeller 505 and a motor 1A that drives the impeller 505. The indoor fan 520 includes an impeller 521 and a motor 1B that drives the impeller 521. Each of the motors 1A and 1B is constituted by the motor 1 described in the first embodiment. FIG. 18(A) also illustrates a compressor 504 that compresses a refrigerant.

FIG. 18(B) is a sectional view illustrating the outdoor unit 501. The motor 1A is supported by a frame 509 disposed in a housing 508 of the outdoor unit 501. The impeller 505 is attached to the rotation shaft 11 of the motor 1 via a hub 506.

In the outdoor fan 510, the rotation of the rotor 2 of the motor 1A causes the impeller 505 to rotate and blow air to the outside of a room. During a cooling operation of the air conditioner 500, heat is released when the refrigerant compressed in the compressor 504 is condensed in a condenser, and this heat is released to the outside of the room by airflow of the outdoor fan 510.

In the indoor fan 520 (FIG. 18 (A)), the rotation of the rotor 2 of the motor 1B causes the impeller 521 to rotate and blow air to the inside of the room. During the cooling operation of the air conditioner 500, the refrigerant removes heat from the air as it evaporates in an evaporator, and the air is blown into the room by airflow of the indoor fan 520.

In the motor 1 of the first embodiment described above, vibration and noise are reduced. Thus, the quietness of the air conditioner 500 can be improved by constituting the motors 1A and 1B using the motor 1 of the first embodiment.

Each of the motors 1A and 1B is constituted by the motor 1 of the first embodiment in this example, but it is sufficient that at least one of the motors 1A and 1B is constituted by the motor 1. Alternatively, the motor of any one of the second to fourth embodiments may be used as the motor 1A, the motor 1B or both.

The motor 1 described in each embodiment can be mounted on any electric apparatuses other than the fan of the air conditioner.

Although the desirable embodiments have been specifically described above, various modifications or changes can be made to those embodiments without departing from the scope of the present disclosure.

### DESCRIPTION OF REFERENCE CHARACTERS

1, 1A, 1B motor; 2, 2A rotor; 3, 3A stator; 5 mold stator; 6 circuit board; 11 rotation shaft; 20, 20A rotor core; 21 magnet insertion hole; 23 magnet; 25 resin part; 30 stator core; 31 core back; 31A core-back part; 32 tooth; 32a tip end; 33 split core; 33a crimping portion; 35 split core unit; 40 insulator (resin component); 41, 41a, 41b wall portion; 42, 42a, 42b flange portion; 42c protrusion (exposed portion); 43 body portion; 45 coil; 50 mold resin part; 51 outer circumferential portion; 52 gap resin part; 53 in-slot resin portion; 54 surface resin portion; 55 recess; 90 outer circumference holding member; 200 mold; 201 upper mold; 202 lower mold; 204 cavity; 205 center shaft; 206 recess; 207 contact surface; 208, 209 positioning pin; 210 runner; 211 gate; 212 rib; 401 convex portion; 402 concave portion; 412 tapered surface (exposed portion); 421 positioning surface; 500 air conditioner; 501 outdoor unit; 502 indoor unit; 503 refrigerant pipe; 504 compressor; 505 impeller; 510 outdoor fan; 520 indoor fan; 521 impeller; G core-back gap; S slot opening.

## Claims

1. A stator comprising:
a stator core having a core back in an annular shape about an axis; and
a mold resin part surrounding the stator core from outside in a radial direction about the axis, the mold resin part being nonmagnetic,
wherein the stator core has a core-back gap passing in the radial direction through at least a part of the core back in a circumferential direction about the axis, and
wherein the mold resin part reaches an inner side of the core back in the radial direction from an outer side of the core back in the radial direction through the core-back gap.

2. The stator according to claim 1, wherein the stator core has at least two split cores,
wherein each of the at least two split cores has a core-back part divided by the core-back gap and a tooth extending inward in the radial direction from the core-back part, a coil being wound around the tooth,
wherein a slot in which the coil is housed is formed between two split cores of the at least two split cores that are adjacent in the circumferential direction, and
wherein the mold resin part extends from the core-back gap to an inside of the slot.

3. The stator according to claim 2, wherein the slot has a slot opening on an inner side in the radial direction, and
wherein the mold resin part has a recess in the slot opening.

4. The stator according to claim 2 or 3, wherein a resin component is attached to each of the at least two split cores, and
wherein the resin component has an exposed portion which is exposed from the mold resin part.

5. The stator according to claim 4, wherein the exposed portion has a support surface facing in the circumferential direction.

6. The stator according to claim 4, wherein the exposed portion has a contact surface facing in the radial direction.

7. The stator according to claim 6, wherein the contact surface is inclined with respect to the axis.

8. The stator according to any one of claims 4 to 7, wherein the resin component has a convex portion and a concave portion, and
Wherein, of the two split cores, a convex portion of the resin component of one split core is engaged with a concave portion of the resin component of the other split core.

9. The stator according to any one of claims 1 to 8, wherein a gate mark is formed on an outer circumferential surface of the mold resin part.

10. The stator according to any one of claims 1 to 9, wherein a volume V1 of a portion of the mold resin part that is located on an outer side in the radial direction with respect to the stator core is larger than a volume V2 of a portion of the mold resin part that is located on an inner side in the radial direction with respect to the stator core.

11. The stator according to any one of claims 1 to 10, further comprising an outer circumference holding member to hold the stator core from outside in the radial direction.

12. The stator according to claim 11, wherein a modulus of elasticity of the outer circumference holding member is lower than a modulus of elasticity of the stator core.

13. The stator according to claim 11 or 12, wherein the outer circumference holding member is composed of a rubber.

14. A motor comprising:
the stator according to any one of claims 1 to 13; and
a rotor disposed inside the stator in the radial direction.

15. The motor according to claim 14, wherein the rotor has a rotor core and a magnet attached to the rotor core, the magnet forming a first magnetic pole, a part of the rotor core forming a second magnetic pole.

16. The motor according to claim 14, wherein the rotor has a rotor core and a first magnet and a second magnet that are attached to the rotor core, the first magnet forming a first magnetic pole, the second magnet forming a second magnetic pole.

17. A fan comprising:
the motor according to any one of claims 14 to 16; and
an impeller rotated by the motor.

18. An air conditioner comprising an outdoor unit and an indoor unit connected to the outdoor unit via a refrigerant pipe,
wherein at least one of the outdoor unit and the indoor unit has the fan according to claim 17.

19. A manufacturing method of a stator, the manufacturing method comprising the steps of:
placing a stator core in a mold, the stator core having a core back in an annular shape about an axis, the core back having a core-back gap passing in a radial direction about the axis through at least a part of the core back in a circumferential direction about the axis; and
molding the stator core integrally with a mold resin,
wherein in the step of placing the stator core in the mold, the core back is brought into contact with a positioning surface of the mold, and
wherein in the step of molding the stator core integrally with the mold resin, the mold resin is made to reach an inner side of the core back in the radial direction from an outer side of the core back in the radial direction through the core-back gap.

20. The manufacturing method of a stator according to claim 19, wherein in the step of placing the stator core in the mold, the core back is positioned in the circumferential direction with respect to the mold by a protrusion provided in the mold.

21. The manufacturing method of a stator according to claim 19 or 20, wherein in the step of molding the stator core integrally with the mold resin, the core back is pressed inward in the radial direction by a positioning portion provided in the mold.
